# EUROPEAN PATENT SPECIFICATION

(11) **EP 1 215 434 B1**
(45) Date of publication and mention of the grant of the patent: **24.08.2005**
(21) Application number: 00500258.9
(22) Date of filing: 18.12.2000
(51) Int. Cl.: F16L 37/084

(54) **Secure connection for fluids systems**
Sichere Verbindung für Flüssigkeitssysteme
Connexion sécurisée pour des systèmes de fluides

(43) Date of publication of application: 19.06.2002
(73) Proprietor: Ferrer Beltran, José Maria, 46131 Bonrepos (Valencia) (ES)
(72) Inventor: Ferrer Beltran, José Maria, 46131 Bonrepos (Valencia) (ES)
(74) Representative: Meissner, Bolte & Partner

(56) References cited:
- EP-A- 0 957 305
- EP-A- 1 006 305
- GB-A- 2 294 990
- US-A- 4 919 457

## Description

The object of the invention protected under this Patent is a "Secure connection for fluids systems".

It is thus a means of joining together flow-regulation devices, such as valves, or accessories, such as elbows, and the pipes for conveying the liquids flowing to or from them.

The qualifier "secure" refers to the guaranteed leak-tightness at the joints, in the case of systems for fluids in the form of liquids, or hermetic seal in the case of gaseous fluids.

The problem of creating a secure, irreversible join between valves or accessories and pipes of suitable diameter has been resolved in various known ways. These ways, as a result of the various technical requirements involved, all possess certain common or at least widely-encountered features.

In all cases, the valve or accessory to be joined to the pipe must feature, at the ends where the pipe is to be housed, an interior perimetric mating system that is specifically suited to receiving the parts that are to form and complete the join in functional terms.

In a well-known arrangement, the connection comprises the following items:
- A seal made of elastic material and usually O-shaped, located at the bottom of the interior housing of the mating-system body.
- An annular metal pipe-retaining clamp, the retaining effect being achieved by providing the lower edge near the seal with a number of elastic flanges inclined inwards from the ring and forming a truncated-cone surface, each flange thus having a trapezial shape with its larger base joined to the lower edge of the ring and its smaller concave-curved base designed to adapt to grip the side surface of the pipe.
- An upper fastening ring-clamp with several slots spread at regularly space angles over its upper edge to confer elasticity on it, usually three slots, at 120°.

EP-A-957 305 shows a connector with afore-mentioned gripping and sealing principles.

The known connection described above entails drawbacks in use, attributable both to the arrangement of its components and to the way they are arranged in relation to each other, such as these:
a) When the pipe is inserted into the connector, marks are left along the axial cylindrical side surface of the pipe when the flanges of the retaining clamp pass over it, and these marks form lines of reduced leak-tightness that facilitate potential leakages of the fluid. This is so because the sealing O-ring is at the bottom of the mating system inside the connector, and so it exerts its action on the side surface of the pipe in a zone that has already been marked by the flanges owing to the annular retaining clamp already having passed over that zone, and this leads to a loss of efficacy.
b) The non-existence on the retaining clamp of specific means for anchoring it to the interior of the connector's mating system means that the join is not totally irreversible, as would be desirable. Consequently, if the pipe is pulled with sufficient force along its length in the direction for extraction, the join may become undone, with the retaining clamp being dragged outwards.

A connector avoiding the first drawback is known from GB-A-2 294 990.

The purpose of the invention of this Patent is to overcome the drawbacks inherent to known connections for fluids systems, these connections having been described above, and the invention having been conceived and designed with this priority objective in mind.

To that end, modifications have been made to the known connection that affect a number its formal characteristics, their number and their positions with respect to each other, and as a result of these modifications, the functional characteristics of the new connection are improved so that it does not reveal the drawbacks encountered in using the known connections.

The structure of the secure connection for fluids systems of this Patent comprises the following elements, described when the axis connector is in a vertical condition in the order in which they are fitted, from the lowest inside to the upper outlet, in the hollow body of the connector.
- An annular metal clamp which, in addition to the pipe-retaining lower flanges, has a number of rectangular flange portions on its upper edge for anchoring the clamp in a perimetric system inside the body of the connector, these flange portions opening up a little towards the outside of the ring for the purpose.
- An annular elastic seat element with a concave-curved upper surface to help to support the O-ring resting on it, and with an upper thicker section on the side surface which pushes the upper flanges of the clamp outwards when the seat mates inside and so facilitates irreversible locking thereof in a pertinent recess in the interior mating system of the connector body.
- At least one O-seal resting on the upper concave-curved face of the annular seat, which exerts radial compression on the side surface of the pipe without leaving weakened-seal lines since it is applied on a zone of the pipe's surface before the pipe is passed through the annular clamp for insertion into the connector.

Another O-seal can be fitted if greater security is desired, as could be the case with gaseous-fluid systems:
- An annular clamp that closes at the top and whose lower face is concave-curved to facilitate its mating tightly on the O-seal, and whose cylindrical side surface features a perimetric projection that fits tightly into a perimetric slot in the interior mating system of the connector body.

As emerges from the above, this inner mating system possesses the following slots, described in the order in which they are found from the inside out:
- A cylindrical zone whose diameter matches the outside of the pipe, the diameter being reduced at its bottom to block further penetration by the pipe.
- An inverted, truncated-cone zone, whose smaller base is of the same diameter as the lower cylindrical zone, intended to receive the lower retaining flanges of the annular metal retaining clamp.
- A cylindrical zone for receiving the annular metal clamp.
- An inverted truncated-cone zone for receiving the anchoring flange portions of the annular metal clamp, for which purpose the cylindrical zone on it is of smaller diameter than the diameter of the larger base of that truncated-cone zone.
- A cylindrical zone of the same diameter as the lower receiving zone of the annular metal clamp; the annular elastic seat element is inserted inside this claim in such a way that its upper perimetric projection pushes the anchoring flange portions towards the truncated-cone zone where they become locked, while in the cylindrical zone described are housed in succession the O-seal or seals and the upper closing annular clamp.
- A groove in the upper part of that cylindrical zone to receive the perimetric projection of the annular closing clamp and securing it in place.

### BRIEF DESCRIPTION OF THE DRAWINGS

To supplement the description of the invention and facilitate interpretation of the formal, structural and functional characteristics of its object, drawings are attached which show in schematic form the various aspects of a preferred embodiment of the "Secure connection for fluids systems" of this Patent.

In these drawings:
- Figure 1 shows a side elevation view of a valve in which the bodies of the secure connectors of this Patent are shown in two vertical sections through their diameters: on one side are shown the structural components, while on the other they are shown without those components in order to reveal the interior perimetric mating system.

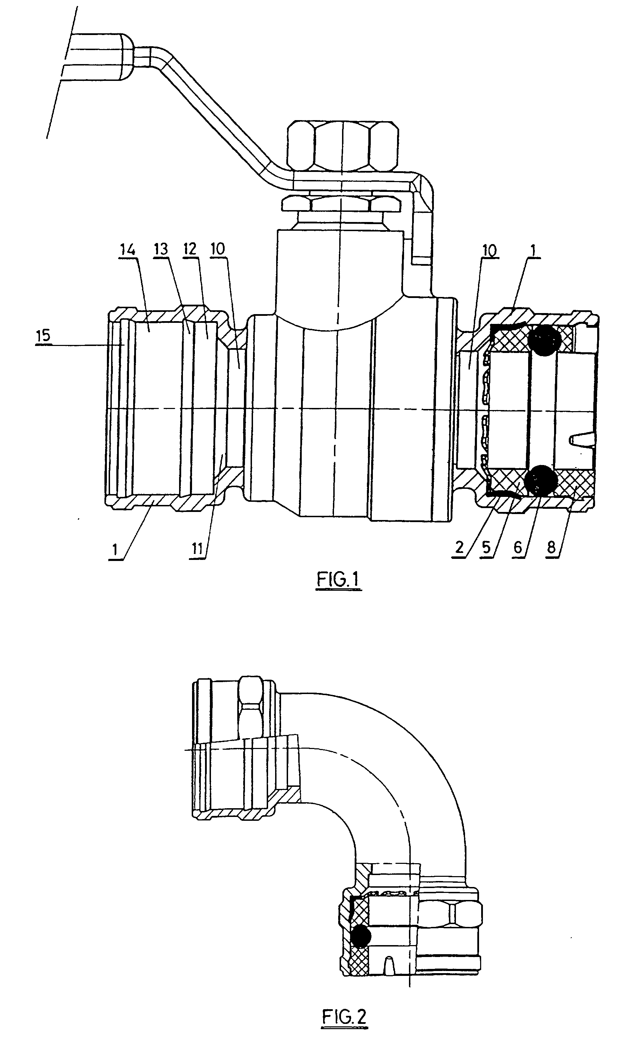

- Figure 2 is a side elevation view of an elbow with secure connections at each end, these being shown in two split sections, respectively with and without the structural components.

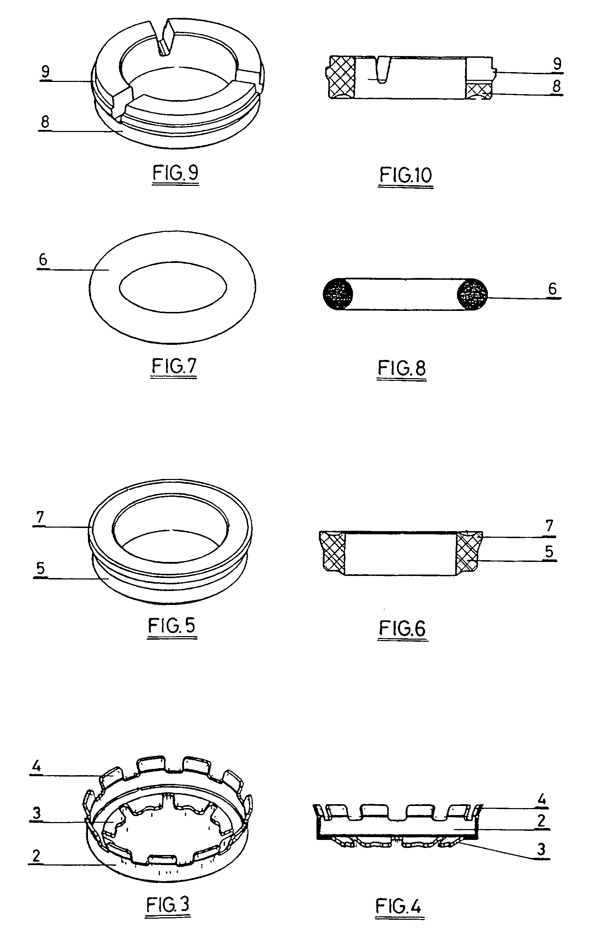

- Figure 3 is a perspective view of the annular metal clamp; and Figure 4 is a section view made through its diameter.
- Figure 5 is a perspective view of the annular elastic seat; and Figure 6 is a section view through its diameter.
- Figure 7 is a perspective view of an O-seal; and Figure 8 is a section view through its diameter.
- Figure 9 is a perspective view of the upper annular closing clamp; and Figure 10 is a section view through its diameter.

### DESCRIPTION OF A PREFERRED EMBODIMENT

In order clearly to show the nature and scope of the advantageous application of the "Secure connector for fluids systems" of the invention claimed herein, its structure and layout are now described, with reference to the drawings which, since they represent a preferred embodiment of this invention for the purposes of information, are to be taken in the broadest way, not limiting the application or content of the invention claimed.

This connector is one of the kind using O-seals and annular metal clamps with flanges for retaining the pipe.

Its structure comprises the following items, described in the order in which they are fitted, from the inside out, in the body (1) of the connector:
- An annular metal clamp (2) which has, in addition to the lower flanges (3) to retain the pipe, a number of rectangular flanges (4) on its upper edge for securing the clamp (2) in a perimetric mating system inside the body (1) of the connector, these flanges opening outwards a little for that purpose.
- An annular elastic seat (5) whose upper face is concave-curved to help the O-seal (6) rest on it, and whose side surface has an upper thickened zone (7) which pushes the upper flanges (4) of the annular clamp (2) outwards when the seat (5) mates with the inside of that clamp (2), so facilitating the irreversible locking thereof in the pertinent groove inside the mating system of the body (1) of the connector.
- At least one seal (6), preferably an O-seal, resting on the upper concave-curved face of the annular seat (5).
- An annular clamp (8) that closes at the top, and whose lower face is concave-curved to facilitate it seating tightly on the O-seal (6); its cylindrical side face has a perimetric projection (9) intended to mate tightly into a perimetric groove in inner mating system of the body (1) of the connector.

The inner mating system of the body (1) of the connector comprises the following slotted zones, described in the order in which they appear from the inside out:
- A cylindrical zone (10) whose diameter matches the outside of the pipe, the diameter being reduced at its bottom to block further penetration by the pipe.
- An inverted, truncated-cone zone (11), whose smaller base is of the same diameter as the lower cylindrical zone (10), intended to receive the lower retaining flanges (3) of the annular metal retaining clamp (2).
- A cylindrical zone (12) for receiving the annular metal clamp (2).
- An inverted truncated-cone zone (13) for receiving the anchoring flanges (4) of the annular metal clamp (2), for which purpose the cylindrical zone on it (12) is of smaller diameter than the diameter of the larger base of said truncated-cone zone (13).
- A cylindrical zone (14) with the same diameter as the lower receiving zone (12) of the annular metal clamp (2); the annular elastic seat (5) is inserted inside this clamp in such a way that its upper perimetric projection (7) pushes the anchoring flanges (4) towards the truncated-cone zone (13) where they become locked, while in the cylindrical zone (14) described are housed in succession the O-seal or seals (6) and the upper closing annular clamp (8).
- A groove (15) in the upper part of that cylindrical zone (14) to receive the perimetric bulge (9) of the annular closing clamp (8) and secure it in place.

## Claims

1. Secure connection for fluids systems, with a connector of the kind that use O-seals and annular metal clamps with flanges for retaining the pipe therein, wherein its structure comprises the following items, described when the axis connector is in a vertical position in the order in which they are fitted, from the lowest inside to the upper outlet, in the hollow body (1) of the connector:
- an annular metal clamp (2) which has, in addition to the lower flanges (3) to retain the pipe, a number of rectangular flange portions (4) on its upper edge for securing the clamp (2) in a perimetric mating system inside the body (1) of the connector, these flange portions (4) opening outwards a little for that purpose;
- an annular elastic seat element (5) whose upper face is concave-curved to help the O-seal (6) rest on it, and whose outer side surface has an upper bulge (7) which pushes the upper flanges (4) of the annular clamp (2) outwards when the seat (5) mates with the inside of that clamp (2), so facilitating the irreversible locking thereof in a pertinent groove inside the mating system of the body (1) of the connector;
- at least one O-seal (6) resting on the upper concave-curved face of the annular seat (5);
- an annular clamp (8) that closes at the top, and whose lower face is concave-curved to facilitate it seating tightly on the O-seal (6), and having on its cylindrical side face a perimetric projection (9) intended to mate tightly into a perimetric groove in interior mating system of the body (1) of the connector.

2. Secure connection for fluids systems, as claimed in Claim 1, wherein the interior mating system of the body (1) of the connector comprises the following slotted zones, described in the order in which they appear from the inside out:
a cylindrical zone (10) whose diameter matches the outside of the pipe, the diameter being reduced at its bottom to block further penetration by the pipe;
- an inverted, truncated-cone zone (11), whose smaller base is of the same diameter as the lower cylindrical zone (10), intended to receive the lower retaining flanges (3) of the annular metal retaining clamp (2);
- a cylindrical zone (12) for receiving the annular metal clamp (2);
- an inverted truncated-cone zone (13) for receiving the anchoring flange portions (4) of the annular metal clamp (2), for which purpose the cylindrical zone on it (12) is of smaller diameter than the diameter of the larger base of that truncated-cone zone (13);
- a cylindrical zone (14) with the same diameter as the lower receiving zone (12) of the annular metal clamp (2), the annular elastic seat element (5) being inserted inside this clamp in such a way that its upper perimetric projection (7) pushes the anchoring flange portions (4) towards the truncated-cone zone (13) where they become locked, while in the cylindrical zone (14) described are housed in succession the O-seal or seals (6) and the upper closing annular clamp (8);
- and a groove (15) in the upper part of that cylindrical zone (14) to receive the perimetric projection (9) of the annular closing clamp (8) and securing it in place.

## Patentansprüche

1. Sicherungsverbindung für Fluidsysteme, mit einem Verbindungsstück der Art, die Dichtungsringe und ringförmige Metallschellen mit Flanschen verwendet, um ein Rohr darin festzuhalten, wobei ihr Aufbau die folgenden Teile umfasst, die in der Reihenfolge vorgesehen sind, in der sie von der untersten Innenseite zum oberen Auslass im Hohlkörper (1) des Verbindungsstücks eingebaut sind, wenn sich das Achsverbindungsstück in einer vertikalen Position befindet:
- eine ringförmige Metallschelle (2), die zusätzlich zu unteren Flanschen (3) zum Festhalten des Rohrs eine Anzahl rechteckiger Flanschabschnitte (4) an ihrem oberen Rand zum Sichern der Schelle (2) in einem umfänglichen Passsystem innerhalb des Körpers (1) des Verbindungsstücks aufweist, wobei sich diese Flanschabschnitte (4) zu diesem Zweck etwas nach außen öffnen;
- ein ringförmiges elastisches Sitzelement (5), dessen Oberseite konkav gekrümmt ist, um das Aufliegen des Dichtungsrings (6) zu unterstützen, und dessen äußere Seitenfläche eine obere Ausbauchung (7) aufweist, die die oberen Flansche (4) der ringförmigen Schelle (2) nach außen drückt, wenn der Sitz (5) in das Innere der Schelle (2) eingreift, wodurch deren irreversible Arretierung in einer dazugehörigen Nut innerhalb des Passsystems des Körpers (1) des Verbindungsstücks erleichtert wird;
- mindestens einen Dichtungsring (6), der auf der konkav gekrümmten Oberseite des ringförmigen Sitzes (5) aufliegt;
- eine ringförmige Schelle (8), die sich oben schließt, und deren Unterseite konkav gekrümmt ist, um zu erleichtern, dass sie eng am Dichtungsring (6) aufsitzt, und die auf ihrer zylindrischen Seitenfläche einen umfänglichen Vorsprung (9) aufweist, der sich dicht in eine umlaufende Nut im inneren Passsystem des Körpers (1) des Verbindungsstücks einpassen soll.

2. Sicherungssystem für Fluidsysteme, nach Anspruch 1, wobei das innere Passsystem des Körpers (1) des Verbindungsstücks folgende mit Schlitzen versehene Bereiche in der Reihenfolge umfasst, in der sie von innen nach außen vorgesehen sind:
- einen zylindrischen Bereich (10), dessen Durchmesser der Außenseite des Rohrs angepasst ist, wobei der Durchmesser an seinem Boden reduziert ist, um ein weiteres Eindringen des Rohrs zu hemmen;
- einen umgekehrten kegelstumpfförmigen Bereich (11), dessen kleinere Grundfläche denselben Durchmesser hat wie der untere zylindrische Bereich (10), und der die unteren Halteflansche (3) der ringförmigen Metallhalteschelle (2) aufnehmen soll;
- einen zylindrischen Bereich (12) zur Aufnahme der ringförmigen Metallschelle (2);
- einen umgekehrten kegelstumpfförmigen Bereich (13) zur Aufnahme der Verankerungsflanschabschnitte (4) der ringförmigen Metallschelle (2), wozu der darauf befindliche zylindrische Bereich (12) einen Durchmesser hat, der kleiner ist als die größere Grundfläche dieses kegelstumpfförmigen Bereichs (13);
- einen zylindrischen Bereich (14) mit demselben Durchmesser wie der untere Aufnahmebereich (12) der ringförmigen Metallschelle (2), wobei das ringförmige elastische Sitzelement (5) so in diese Schelle eingesteckt ist, dass sein oberer umfänglicher Vorsprung (7) die Verankerungsflanschabschnitte (4) zum kegelstumpfförmigen Bereich (13) hin drückt, wo sie arretiert werden, während im beschriebenen zylindrischen Bereich (14) der Dichtungsring oder die Dichtungen (6) und die obere ringförmige Verschlussschelle (8) aufgenommen sind;
- und eine Nut (15) im oberen Teil dieses zylindrischen Bereichs (14), um den umfänglichen Vorsprung (9) der ringförmigen Verschlussschelle (8) aufzunehmen und sie an Ort und Stelle festzusetzen.

## Revendications

1. Connexion sûre pour systèmes de fluide, équipée d'un connecteur du type de ceux qui utilisent des joints toriques et des brides métalliques annulaires comportant des flasques pour retenir un tuyau à l'intérieur, dont la structure comprend les éléments suivants, décrits lorsque le connecteur d'axe est en une position verticale, dans l'ordre dans lequel ils sont adaptés, de l'intérieur inférieur jusqu'à la sortie supérieure, dans le corps creux (1) du connecteur :
- une bride métallique annulaire (2) qui possède, outre les flasques inférieures (3) pour retenir le tuyau, une certaine quantité de sections de flasque rectangulaire (4) sur son arête supérieure pour assurer la bride (2) dans un système d'adaptation périmétrique à l'intérieur du corps (1) du connecteur, ces sections de flasque (4) s'ouvrant un peu vers l'extérieur dans ce but ;
- un élément de siège élastique annulaire (5) dont la face supérieure est incurvée dans le sens concave pour aider le joint torique (6) à reposer sur lui et dont la surface latérale extérieure possède un renflement supérieur (7) qui pousse vers l'extérieur les flasques supérieurs (4) de la bride annulaire (2) lorsque le siège (5) s'adapte à l'intérieur de cette bride (2), facilitant ainsi son verrouillage irréversible dans une rainure pertinente à l'intérieur du système d'adaptation du corps (1) du connecteur ;
- au moins un joint torique (6) reposant sur la face supérieure incurvée de façon concave du siège annulaire (5) ;
- une bride annulaire (8) qui se referme au sommet et dont la face inférieure est incurvée de façon concave pour faciliter son repos étroit sur le joint torique (6) et possédant sur sa face latérale cylindrique une projection périmétrique (9) dont le but est de s'adapter étroitement à une rainure périmétrique dans un système d'adaptation intérieur du corps (1) du connecteur.

2. Connexion sûre pour systèmes de fluide selon la revendication 1, dans laquelle le système d'adaptation intérieur du corps (1) du connecteur comprend les zones fendues suivantes, décrites dans l'ordre dans lequel elles apparaissent :
- une zone cylindrique (10) dont le diamètre s'adapte à l'extérieur du tuyau, le diamètre étant réduit en son bas pour bloquer une pénétration supplémentaire du tuyau ;
- une zone tronconique inversée (11) dont la base plus étroite est du même diamètre que la zone cylindrique inférieure (10), dont le but est de recevoir la flasque inférieure de retenue (3) de la bride de retenue métallique annulaire (2) ;
- une zone cylindrique (12) pour recevoir la bride métallique annulaire (2) ;
- une zone tronconique inversée (13) pour revoir les sections de flasque d'ancrage (4) de la bride métallique annulaire (2), raison pour laquelle la zone cylindrique sur elle (12) est de diamètre plus petit que le diamètre de la base plus grande de cette zone tronconique (13) ;
- une zone cylindrique (14) de même diamètre que la zone de réception inférieure (12) de la bride métallique annulaire (2), l'élément de siège élastique annulaire (5) étant inséré dans cette bride d'une manière telle que sa projection périmétrique supérieure (7) pousse les sections de bride d'ancrage (4) vers la zone tronconique (13) où elles sont verrouillées, alors que dans la zone cylindrique (14) décrite sont logés successivement le joint torique ou les joints (6) et la bride annulaire de fermeture supérieure (8) ;
- et une rainure (15) dans la partie supérieure de cette zone cylindrique (14) pour recevoir la projection périmétrique (9) de la bride de fermeture annulaire (8) et l'assurer en place.
